# EUROPEAN PATENT APPLICATION

(11) **EP 2 328 018 A1**
(43) Date of publication of application: **01.06.2011**
(21) Application number: 09806476.9
(22) Date of filing: 28.07.2009
(51) Int. Cl.: G03B 17/00

(54) **DIGITAL CAMERA AND ASSOCIATED METHOD**

(30) Priority: 08.08.2008 ES 200802406
(71) Applicant: Crambo, S.a., 28850 Torrejon de Ardoz (ES); Garcia Manchado, Nilo, 28850 Torrejon De Ardoz (ES)
(72) Inventor: GARCIA MANCHADO, Nilo, E-28850 Torrejon de Ardoz (Madrid) (ES)
(74) Representative: Temino Ceniceros, Ignacio
(86) International application number: PCT/ES2009/070319
(87) International publication number: WO 2010/018287

(57) **Abstract**

The main subject matter of the present invention is a digital camera (1) provided with several lenses (2, 4) such that several images are captured simultaneously, more particularly two images: a main image (8) of the scene in front of the digital camera (1) and an additional image (9) of the person operating the digital camera (1). The invention comprises both digital photographs and digital videos.

## Description

The main subject matter of the present invention is a digital camera provided with several lenses such that several images are captured simultaneously. Another object of the invention is an image making procedure that creates a folder with an image that simultaneously includes at least two of the acquired images.

### BACKGROUND OF THE INVENTION

Currently, there are many digital cameras available for taking photographs or video. These cameras normally have one lens located on one of its sides and a display screen on the opposite side so the user can look at the screen and see the image that is being captured by the lens, which he wishes to acquire. Each time an image is acquired, regardless of whether these are pictures or digital video, the camera stores these in an image file that can later be viewed on the camera's display screen or on a computer screen such as that of a PC or similar device. A great advantage of these cameras is the ease with which image files are created and deleted, which can be carried out at virtually no cost. However, sometimes the acquired images are not able to portray an accurate idea of what wants to be transmitted to a person that is at a different location. Also, in the specific case of videos, frequently, the person that records the video adds his own comments, which are recorded as an off voice without being able to see or know who the person making the commentary is.

Document US2008/0031606 describes an electronic device that includes a camera capturing the front and another one capturing the rear or the sides in a mobile assembly. However, this configuration is designed for video-conferencing, where the secondary camera displays the image of the person giving the video conference on the listener's device and not on the device itself. Likewise, said document does not describe any means or possibility of integrating the images of the main camera and the image captured by the secondary camera onto a single image with different layers, in such a way so the photograph and the photographer can be identified in a single file.

The presence of two cameras in most of the mobile phones that are currently available does not necessarily imply that these have the capability of simultaneously capturing images with similar quality characteristics, much less that said telephones include means for unifying both photographs into a single file and therefore do not meet the desired object of identifying the captured primary image by means of the secondary image.

Other documents such as US2002/0083323 describe a method for identifying the photographer by including his digital signature with the photograph itself. The problem with this is that said digital signature is associated with the camera and under normal usage; different photographers could use the same camera without being accurately identified. Document EP1863266 describes a photographic camera that is capable of integrating GPS coordinates onto the photograph itself. Document EP1818855 describes a facial identification system using infrared technology incorporated onto a mobile phone or other similar device that includes a camera.

In general, none of the documents found in the state of the art describes a photographic camera or electronic device that contains the method described herein, where using two cameras allows one to simultaneously capture two images of the same scene and joining both images into a single file afterwards.

### DESCRIPTION OF THE INVENTION

A first aspect of the invention is therefore focused on a digital camera that includes a primary lens pointing forward that acquires images of a main scene located in front of said digital camera. Additionally, the digital camera described in the invention includes at least an additional lens that simultaneously takes images of an additional scene; all of this within a single "scenery", which includes a primary and a secondary scene.

In other words, the additional lens is pointing in a direction that is different than the primary lens. Additionally, both images are simultaneously displayed on a screen, which may be the screen that is typically included with current digital cameras, or in the case of a mobile phone, the mobile phone's screen.

In this document, the word "image" must be interpreted broadly, so when stating that an image is acquired, the intention is to reference a fixed image; in other words, a digital picture as well as a video. This way, the digital camera described in the invention simultaneously takes images of the primary scene and of various scenes in the surrounding area, which are then used to create a single and improved image file. In a preferred embodiment of the invention, the additional lens is pointing towards the rear, and in this way, acquires images of the scene located behind said digital camera. Therefore, if the digital camera is used in the normal way, images of the person handling the camera will be taken.

This solves the technical problems derived from the lack of photograph and/or photographer identification by adding a secondary image to the primary image, where this primary image is identified by the secondary, which belongs to the same scenery, although they belong to different scenes.

In another preferred embodiment of the invention, primarily focused on video images, the digital camera described in this invention also includes a primary microphone, which records the sounds of the scene located in front of said digital camera and an additional microphone, which records the sounds of the scene located behind the digital camera. It is understood that the primary microphone will normally be facing towards the front and at a forward position, while the additional microphone will normally be facing towards the rear and at a backwards position.

Another preferred embodiment of the digital camera described in this invention includes a mobile lens that can be pointed in different directions. The user can capture images of the scene located in front of the digital camera as well as acquire images of any other area by pointing the mobile lens to that other desired area.

In yet another preferred embodiment, the digital camera includes two additional lenses pointing to the right and left sides of the digital camera. This way, the information obtained is much greater since not only is a picture taken or recorded of the scene in front of the camera but also, of what is happening at both sides (for example, the ocean or a sunset). In another preferred embodiment of the invention, the camera includes two other additional lens pointing upward and downward, in this way capturing what is occurring above the scene (for example, the sky) and below (for example, the sand of a beach).

Other preferred embodiments of the invention, which provide numerous advantages as compared with the digital cameras that currently exist, are described below. In general, these advantages are obtained from fundamentally providing the user with tools that enable him to add information or modify the acquired images from the camera itself, instead of having to do so afterwards, using an additional image editing software.

This way, in a preferred embodiment, the digital camera also includes a GPS positioning means, which enables the user to associate the acquired images with their location. The information regarding the location of the images can be added in different ways for example, in the name of the image file, overlaid on top of the images, etc. In accordance with another embodiment of the invention, the digital camera also includes a means for adding the digital signature, which enables the user to associate the acquired images to a digital signature. The photographs or videos are downloaded directly from the camera with the digital signature already added.

In another particular embodiment, the digital camera also includes an image recognition means, which recognizes the people that appear in the images and associates the acquired images with their names, and in this way, enabling the user to subsequently classify the images by the names of the people that appear in them, of the person taking the photographs or recording the images, etc.

In another embodiment of the invention, the digital camera also includes a text insertion means that adds text to the acquired images. This item enables the user to easily add comments or subtitles to the images. Also, in accordance with a second preferred embodiment of the invention, an image forming procedure is described in a digital camera of the type described above, characterized because it includes the following procedures:
a) Acquire, using a primary lens, a first image of the scene located in front of the digital camera. This is the lens that digital cameras normally incorporate.
b) Using an additional lens, simultaneously acquire at least one additional image of a different scene.
c) Create a file where each image is stored in a different layer. The created file will be an image file similar to any of the types of image files that are currently used, and since they are divided into layers, they can be separately edited, modified, etc.

In a particular embodiment, the additional lens is pointing towards the rear of the camera, obtaining images of the person that is operating the camera. Preferably, the primary and additional images are simultaneously displayed in the image file that has been created. Even more preferably, a smaller size of the additional image is displayed in the image file overlaid in front of the primary image. In this document, small size is defined as a size that is approximately ten times smaller than the surface of the primary image. Also, in another embodiment of the invention, the additional image is placed at a corner of the primary image, exactly at the corner or a bit separated from the edges. Also, in the particular case of acquiring video images, the procedure of this invention preferably involves recording the sounds of the scene located in front of the digital camera using a primary microphone, and simultaneously recording the sounds of different scenes using an additional microphone. Preferably, this additional scene is located behind the digital camera so the voice of the person that is operating the camera is being recorded. This way, comments or explanations about the scene that are being recorded can be added. Once acquired, these sound files are stored in the image file in different layers. Evidently, the sounds of the scene located in front of the camera should be associated in some way to the images of said scene, in other words, those images acquired by the primary lens, while the sound corresponding to the comments of the person handling the camera should be associated with the images obtained by the additional lens. An additional preferred embodiment of the procedure includes the obtaining of information regarding the location of the acquired image using GPS, and adding this information as another layer to the image file that has been created. In another preferred embodiment, a digital signature is obtained using a means for adding a digital signature, which is added as another layer to the image file. Finally, in another preferred embodiment, an image recognition means is used to obtain the names of the persons that appear in the images, which are added to the image file in a new layer. A digital camera as the one described could be integrated for example, in a mobile phone.

### DESCRIPTION OF THE DRAWINGS

To complement the description that is being carried out and for the purpose of better understanding the characteristics of the invention; in accordance with a preferred example for carrying it out in a practical way, a set of drawings are provided along with their description, which represent the following in an illustrative but not a limiting fashion:
Figure 1. - Shows a three-dimensional front view of the digital camera described in this invention.
Figure 2. - Shows a three-dimensional rear view of the digital camera described in this invention.
Figure 3. - Shows a side view of the digital camera described in this invention, where you can see the location of the primary lens and an additional lens.
Figure 4. - Shows a person using the digital camera described in this invention.
Figure 5. - Shows an image obtained with the digital camera of figure 4.
Figure 6. - Shows a diagram of the parts that comprise the digital camera described in this invention in accordance with a particular embodiment.

### PREFERRED EMBODIMENT OF THE INVENTION

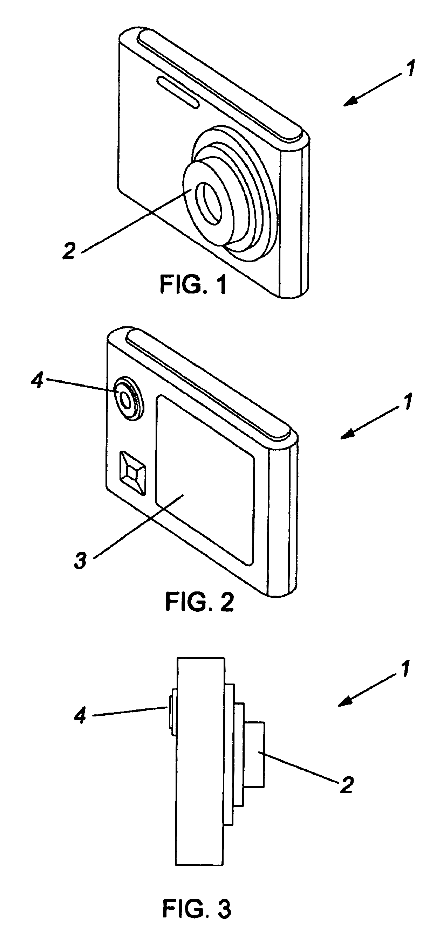

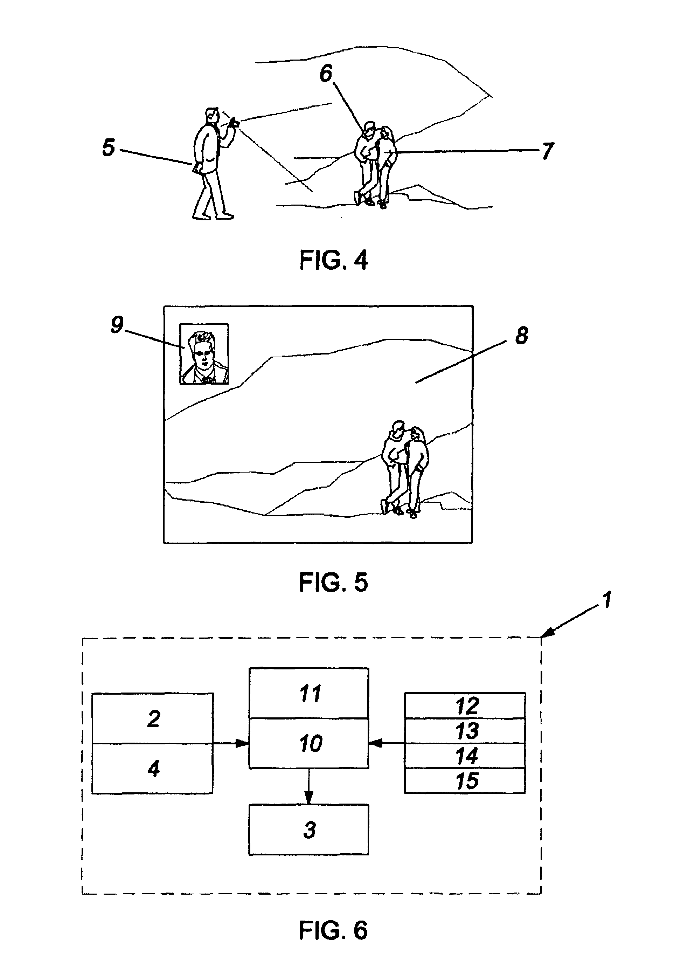

An example of the preferred embodiment of the invention that is specifically focused on taking digital photographs is described below. Any expert in the matter will understand that the operation of a digital video camera would essentially be the same as described below. Figs. 1, 2 and 3 show different views of a digital camera (1) in accordance with this invention. These figures show a primary lens (2) and a display screen (3), which are common in these types of devices. In this example, the digital camera (1) described in the invention also includes an additional lens (4) pointing in the opposite direction of the primary lens (2). The additional lens (4) is especially designed for obtaining clear images of the person that is operating the camera, using as a reference the position in which an average user would be operating it, positioning the camera in front of the eyes and at a distance between 25 cm and 50 cm. Fig. 4 shows a photographer (5) taking a photograph of two other people (6, 7). We can see how the digital camera (1) described in this invention simultaneously acquires an image of the photographer (5) and the two persons (6, 7). Using the procedure described in this invention, the digital camera (1) creates an image file that is shown in Fig. 5, and where the larger sized primary image (8) shows the two persons (6, 7) acting as models, while a smaller sized additional image (9) shows the face of the photographer (5) at the moment in which the picture was taken. Finally, Fig. 6 shows a diagram of the digital camera (1) described in this invention, which shows the different parts that comprise it. A processing means (10) processes all the data obtained from the rest of the components. A storage means (11) is also shown. The components are the following:
- A GPS positioning (12) means, which obtains information regarding the location of the digital camera (1) when the image is acquired and adds this information to the created image file as a different layer. According to the user's preferences, the name or position of the place where the images where acquired can be added in different ways like for example, in the file name, as overlaid text, etc.
- A means for adding a digital signature (13), which adds the digital signature for example, of the photographer (5) to an additional layer of the image.
- An image recognition (14) means that is capable of analyzing the acquired images and of recognizing the persons that appear in them. Once the persons are identified, the user can assign a name to each one, which will be stored in the storage means (11).

Thus, for each acquired image, the image recognition means (14) will carry out a search of the persons, including the photographer (5) and will add these to a new layer of the created image file. This allows organizing the images afterwards according to the persons appearing in them. For example, only the images taken by a specific photographer (5) could be selected, or only those images in which a specific person appears in the primary image (8).
- A text addition means (15), which is used to add text to the acquired images. In the particular case of the example, which refers to digital photographs, a comment may be added as a footnote: "Vacation in the Alps". In the case of video images, different texts could be added sequentially like subtitles of the story that is taking place in front of the camera.

## Claims

1. Digital camera (1) that includes a primary lens (2) pointing forward that acquires a primary image (8) of the scene located in front of said digital camera (1) and includes at least one additional lens (4) pointing in a different direction that simultaneously acquires an additional image (9) of the area surrounding the primary image (8) **characterized in that** it also includes means configured for integrating said additional image (9) onto the primary image (8) in different layers, creating a single scenery, and where both images are simultaneously displayed (8, 9) on the display screen (3).

2. Digital camera (1) in accordance with claim 1, **characterized in that** the additional lens (4) is pointing towards the rear, and in this way acquiring an additional image (9) of the scene located behind said digital camera (1).

3. Digital camera (1) in accordance with claim 2, **characterized in that** it also includes a primary microphone that is pointing forward, which records the sounds of the scene located in front of said digital camera (1), and an additional microphone pointing towards the rear, which records sounds from the scene located behind the digital camera (1).

4. Digital camera (1) in accordance with claim 1 **characterized in that** the additional lens (4) is mobile and can be pointed in different directions.

5. Digital camera (1) in accordance with claim 1, **characterized in that** it also includes two additional lenses pointing to the right and left of the camera so images are acquired of the scenes located to the right and to the left of the digital camera (1).

6. Digital camera (1) in accordance with claim 5, **characterized in that** it also includes two additional lenses pointing up and down, so images are acquired of the scenes located above and below the digital camera (1).

7. Digital camera (1) in accordance with any of the aforementioned claims, **characterized in that** it also includes a GPS positioning means (12) that allows associating the acquired images to their location and/or integrate the map into these images.

8. Digital camera (1) in accordance with any of the aforementioned claims, **characterized in that** it also includes a means for adding a digital signature (13) that allows associating the acquired images to a digital signature.

9. Digital camera (1) in accordance with any of the aforementioned claims, **characterized in that** it also includes a means for recognizing images (14), which recognizes the persons that appear in the images and associates the acquired images with their names.

10. Digital camera (1) in accordance with any of the aforementioned claims, **characterized in that** it also includes a means for adding text (15), which adds text to the acquired images.

11. Digital camera (1) in accordance with any of the aforementioned claims, **characterized in that** it also includes a processing means (10) that creates an image file where the primary image (8) and the additional image (9) simultaneously appear.

12. Digital camera (1) in accordance with claim 11, **characterized in that** the image file includes smaller sized additional image (9), which is overlaid on top of the primary image (8).

13. Digital camera (1) in accordance with any of the aforementioned claims, **characterized in that** it is integrated inside a mobile phone.

14. Image forming procedure in a digital camera (1) in accordance with any of the preceding claims, **characterized in that** it includes the following procedures: use a primary lens (2) that is pointing forward to acquire a primary image (8) of the scene located in front of the digital camera (1); and, using an additional lens (4), simultaneously acquire at least one additional image (9) of a different scene in the area surrounding the primary image (8); and create a single file where each image is stored in a different layer of said single file.

15. Image forming procedure in a digital camera (1) in accordance with claim 14, **characterized in that** the additional lens obtains an image of the scene located behind the digital camera (1).

16. Image forming procedure in a digital camera (1) in accordance with any of claims 14-15, **characterized in that** it also includes the ability of simultaneously displaying both images.

17. Image forming procedure in a digital camera, (1) in accordance with claim 16, **characterized in that** a small sized additional image (9) is shown in front of the primary image (8).

18. Image forming procedure in a digital camera (1) in accordance with claim 17, **characterized in that** the secondary image is placed at a corner of the primary image.

19. Image forming procedure in a digital camera (1) in accordance with any of claims 14-18, **characterized in that** it also includes the following procedures: use a primary microphone that is pointing forward, to record the sounds of the scene located in front of the digital camera (1); use an additional microphone to simultaneously record the sounds of a different scene; and create a file where each recorded sound is in a different layer.

20. Image forming procedure in a digital camera, (1) in accordance with any of claims 14-19, **characterized in that** it also includes the following procedures: use a GPS locating means (12) to obtain information relating to the location of the acquired image; and add an additional layer to the file with this information relating to the location.

21. Image forming procedure in a digital camera, (1) in accordance with any of claims 14-20, **characterized in that** it also includes the following procedures: use a means for adding a digital signature (13) to obtain a digital signature; and add an additional layer to the file that includes said digital signature.

22. Image forming procedure in a digital camera (1) in accordance with any of claims 14-21, **characterized in that** it also includes the following procedures: use an image recognition means (14) to obtain the names of the persons appearing in the images; and add an additional layer to the file with the names of the persons appearing in the images.

23. Image forming procedure in a digital camera (1) in accordance with any of claims 14-22, **characterized in that** it also includes the following procedures: use a means for adding text (15) to create text for the acquired images; and add an additional layer to the file that includes said text.
